Europäisches Patentamt

(19) European Patent Office

Office européen des brevets

(11) Publication number: **0 126 052**
A2

(12) # EUROPEAN PATENT APPLICATION

(21) Application number: **84850149.0**

(51) Int. Cl.³: **B 60 G 9/00**

(22) Date of filing: **14.05.84**

(30) Priority: **13.05.83 SE 8302732**

(43) Date of publication of application:
**21.11.84 Bulletin 84/47**

(84) Designated Contracting States:
**AT BE CH DE FR GB IT LI LU NL SE**

(71) Applicant: **INVENTAB ELECTRONIC AB**
P.O. Box 1550
S-221 01 Lund(SE)

(72) Inventor: **Odlén, Lars**
Mangatan 1
S-232 00 Arlöv(SE)

(74) Representative: **Ström, Tore et al,**
Ström & Gulliksson AB P.O. Box 4188
S-203 13 Malmö(SE)

(54) Method for indicating slipping of a driving rotative element.

(57) Method for indicating slipping between a surface and a driving element (10B) engaging said surface at a circular peripheral surface. The periods of one revolution of said element and a free-running rotative element (10F) engaging said surface at a circular peripheral surface, or parts or multiples thereof are sensed and compared to provide a first signal ($S_1$), representing an existing difference. The period sensed for the free-running rotative element and the immediately preceding period for said element are compared to provide a second signal ($S_2$) representing an existing acceleration of the rotative element. The first and second signals are compared and indication is effected in dependence on the relation of magnitude of the signals.

EP 0 126 052 A2

Croydon Printing Company Ltd

# METHOD FOR INDICATING SLIPPING OF A DRIVING ROTATIVE ELEMENT

The invention relates to a method for indicating slipping between a surface and a driving rotative element engaging said surface at a circular peripheral surface wherein quantities related to the rotational speed of said element and a free-running rotative element engaging the surface at a circular peripheral surface are sensed and indication is made in dependence on an existing difference between the quantities sensed.

One application of the method of the invention is in so-called slippage warners for motor vehicles, i.e. devices which indicate to the driver in one way or the other that the road condition involves a risk of the road grip of the wheels being reduced such that skidding may occur at braking or change of the driving direction. In this way the driver's attention can be drawn to the prevailing risk well before he notices this in another way - perhaps too late. The method of the invention when applied in this manner is based on the fact that a driving wheel slips against a slippery road surface to a greater extent than a free-running wheel.

Several different embodiments of such slippage warners have been proposed already and herein reference is made to the Swedish laid-open specification 337,332 for exemplifying purposes only. In this case, for the generation of the signal which represents the rotational speed of a wheel, a tooth disc is used which rotates together with the wheel and the teeth of which initiate a signal pulse from a signal transmitter each time a tooth passes the signal transmitter. The tooth disc is not ideal in this connection. It is difficult to mount the disc, and the space available for the mounting of the disc is greatly limited. Moreover, the disc is heavy and thus increases the resiliently suspended mass of the wheel, which adversely affects the road performance of the vehicle. Finally, the disc is sensitive to dirt; when the disc is dirty a false and unreliable indication may be obtained.

The purpose of the invention in the first place is to provide a simplified embodiment of slippage warners for motor vehicles while obtaining great reliability of the indication by said tooth disc being eliminated and replaced by a simple system for generating said quantities, but the invention as to the broadest aspects thereof is not limited to slippage warners; it can be applied also for indicating slippage between a driving wheel or a driving roller and an endless element driven by the wheel or roller, such as a belt, a conveyor belt or a web of material. In that case, the free-running rotative element can comprise a wheel with a signal transmitter, which is engaged with the endless element and is driven by said element.

For the related purpose the method of the invention has obtained the characteristics according to claim 1.

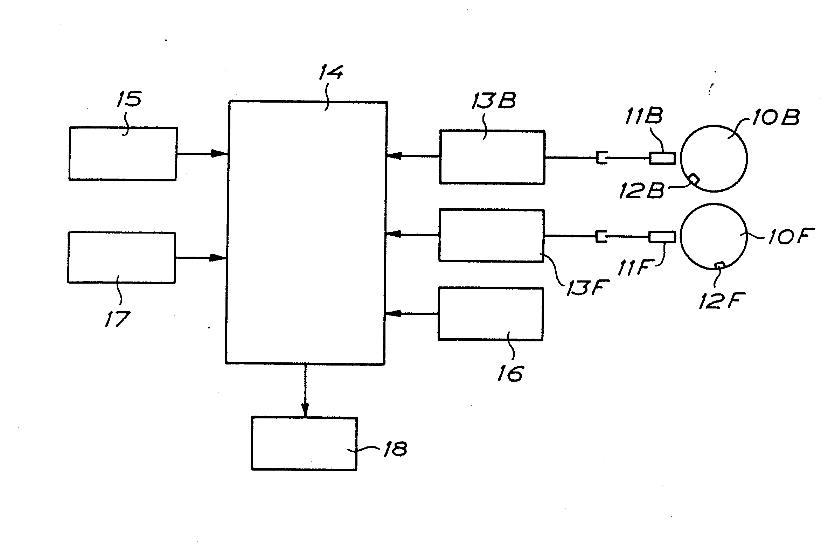

In order to explain the invention in more detail, applied to a slippage warner for motor vehicles reference is made to the accompanying drawing in which the single figure is a block diagram of the slippage warner.

In the drawing, there is shown a wheel 10B which may be assumed to be the rear left driven wheel of the motor vehicle, and a wheel 10F which may be assumed to be the free-running front left wheel of the motor vehicle. Reference could as well be made to the rear wheel and the front wheel at the left side of the vehicle, and at a front drive car the wheel 10B will be the free-running wheel while the wheel 10F will be the driving wheel. Each wheel is combined with a signal transmitter which in the present case is assumed to be a magnetic signal

3

transmitter and comprises a stationary coil 11B and 11F, respectively, and a magnet 12B and 12F, respectively, mounted to the wheel. The magnet can be mounted to the rim of the wheel substantially in the same manner as a conventional balance weight. Each time the magnet passes the associated coil an electric signal pulse will be generated in the coil. The magnetic signal transmitter can be replaced by an optical, acoustical, magnetical or capacitive signal transmitter. The important thing is that there is obtained a signal pulse for each revolution of the rotating wheel. The coil 11B is connected via an amplifier 13B to a computing unit (microprocessor, analogue circuits, digital logic) 14, and in a corresponding manner the coil 11F is connected via an amplifier 13F to the computing unit 14. In addition to calculating circuits this unit includes a (P)ROM which contains the program for the calculating operations which are to be performed by the computing unit, and a RAM the purpose of which is to store temporarily calculated quantities. Moreover, an oscillator (clock circuit) 15 is connected to the computing unit 14.

When applying the method of the invention the computing unit 14 shall calculate the period of one revolution of the respective wheels 10B and 10F in dependence on the signal pulses supplied to the computing unit from the signal transmitters of the respective wheels. If it is assumed that the signal transmitter 11B, 12B supplies a signal pulse n when the magnet 12B passes the coil 11B and then supplies an additional signal pulse $n^{+1}$ when the magnet 12B passes again the coil 11B after one revolution of the wheel 10B, the computing unit 14 shall calculate in dependence on these signal pulses the period between the pulse n and the pulse $n^{+1}$, i.e. the period of one revolution of the wheel 10B. This period will be stored in the RAM of the computing unit. In the same manner the computing unit will receive two signal pulses from the wheel 10F to calculate the period of one revolution of this wheel, and this period too will be stored in the RAM of the computing unit 14. The magnets 12B and 12F of the wheels do not rotate synchronously as to the position thereof and therefore the periods of one revolution will not be available in the computing unit 14 simultaneously but must be stored temporarily in the RAM of the computing unit. This unit compares the two periods of one revolution and the difference therebetween will be represented by a signal which henceforth will be designated $S_1$. The computing unit previously has calculated in dependence on a signal pulse $n^{-1}$ and the signal pulse n from the free-running front wheel 10F and has stored a period of one revolution preceding the period now of interest, and these two periods of the free-running front wheel 10F will be compared in the computing unit to obtain a difference signal which will be designated $S_3$ and represents an existing acceleration of the motor vehicle.

A circuit 16 is connected to the computing unit 14 to inhibit all further processing of the signals as long as the vehicle has not attained a predetermined lowermost speed, e.g. 40 km/h. The reason therefor is that information below e.g. 40 km/h may be misleading and therefore is of no interest.

Provided that the vehicle has attained the minimum speed the computing unit 14 will compare the signal $S_1$ previously calculated, i.e. the difference between the periods of one revolution of the wheels 10B and 10F to be compared with each other, with a predetermined threshold value $S_0$ (discrimination) which is introduced into the computing unit 14 by means of a circuit 17 and represents the slippage of the driving wheel 10B, which is considered allowable without risk of skidding when driving the vehicle. The comparison is effected by subtracting the signal $S_0$ from the signal $S_1$, a signal being obtained which will be designated $S_2$. If this signal equals zero or is less than zero, continued processing of the signals in the computing unit will be inhibited. However, if the signal $S_2$ is greater than zero, this may be due to the fact that the driving wheel 10B slips against the road surface but may also be due to the fact that the vehicle is accelerating when the periods of one revolution are being measured such that the vehicle had a higher speed when the period of one revolution of one wheel was measured, than when the period of one revolution of the other wheel was measured. Therefore, the signal $S_2$ is now compared with the signal $S_3$, said latter signal representing the acceleration of the vehicle. The difference between the signal $S_2$ and the signal $S_3$ forms a signal which will be designated $S_4$ and which represents with reasonable accuracy substantially only the difference of the periods of one revolution existing between the free-running wheel 10F and the driven wheel 10B independent of existing acceleration of the vehicle. If the signal $S_4$ equals zero or is less than zero, continued processing of the signals in the computing unit will be inhibited, but if the signal $S_4$ is greater than zero, there is a risk of slippage under the conditions determined by the circuits 16 and 17. Then, the computing unit 14 will supply a signal to an indicator and/or alarm device 18 so as to draw the driver's attention to the risks to be considered at the driving under the prevailing conditions.

Greater accuracy than that described herein can be obtained when applying the method of the invention by calculating also the acceleration change for which it is

6

required that also the acceleration between the signal pulses $n^{-1}$ and $n^{-2}$ for the free-running wheel 10F is calculated in the computing unit 14 to obtain a signal which represents the difference of acceleration between two revolutions of the free-running wheel, following one upon the other. In this manner the accuracy can be further increased by returning to preceding revolutions of the free-running wheel 10F. Moreover, the accuracy and reliability of the slippage warner can be increased also by sensing not only the periods of one revolution of the wheels at one side of the vehicle but also the periods of one revolution of the wheels at the other side of the vehicle.

In the illustrative embodiment there is obtained one signal pulse for each revolution of the wheel for calculating the period of one revolution, but it is also possible that the computing unit 14 operates with parts or multiples of the period of one revolution, which means that several signal pulses are supplied for each revolution and that the period is measured between pulses for every second, every third revolution, etc.

The important thing of the invention is the method in which the periods for one revolution are sensed to obtain a signal which is representing prevailing slippage of the driving wheel independent of prevailing acceleration of the vehicle. However, it would be obvious to the average man skilled in the art of electronics and computer technique to design the circuits of the computing unit 14, which are required for electronic calculation of the several quantities which must be available for applying the method of the invention. Further details of the electronic circuits therefore have not been shown herein.

1

## CLAIMS

1. Method for indicating slipping between a surface and a driving rotative element (10B) engaging said surface at a circular peripheral surface, wherein quantities related to the rotational speed of said element and a free-running rotative element (10F) engaging the surface at a circular peripheral surface are sensed and indication is made in dependence on an existing difference between the quantities sensed, c h a r a c t e r i z e d in that related periods for the two rotative elements (10B, 10F) comprising the periods of one revolution of the rotative elements or parts or multiples thereof are sensed and compared to provide a first signal $(S_1)$ representing existing difference of the related periods, that the related period sensed for the free-running rotative element (10F) and the immediately preceding related period of this element are compared to provide a second signal $(S_4)$ representing existing acceleration of the rotative elements, and that the first and second signals are compared and indication is effected in dependence on the magnitude relation of the two signals.

2. Method as claimed in claim 1, c h a r a c - t e r i z e d in that reduction is made by a pre-determined threshold value $(S_0)$ in the calculation and that the comparison of the first and second signals is inhibited at a result obtained which equals zero or is less than zero.

3. Method as claimed in claim 2, c h a r a c - t e r i z e d in that the first signal $(S_1)$ is reduced by the predetermined threshold value $(S_0)$.

4. Method as claimed in claim 2 or 3, c h a r a c t e r i z e d in that the indication is effected at a result obtained above zero.

15

14

13B

11B

10B

12B

17

13F

11F

10F

12F

16

18

0126052